# EUROPÄISCHE PATENTSCHRIFT

(11) **EP 0 518 350 B1**
(45) Veröffentlichungstag und Bekanntmachung des Hinweises auf die Patenterteilung: **05.08.1998**
(21) Anmeldenummer: 92109910.7
(22) Anmeldetag: 12.06.1992
(51) Int. Cl.: B60J 1/18

(54) **Verwendung einer im wesentlichen aus Polyurethan bestehenden flexiblen Sichtscheibe für faltbare Verdecke von Cabriolets**
Use of a flexible window pane consisting substantially of Polyurethane for foldable tops of convertibles
Utilisation d'une fenêtre flexible se composant substantiellement de Polyurethane pour une capote d'une voiture décapotable

(30) Priorität: 12.06.1991 DE 4119274
(43) Veröffentlichungstag der Anmeldung: 16.12.1992
(73) Patentinhaber: Bayerische Motoren Werke Aktiengesellschaft, 80788 München (DE); ED. SCHARWÄCHTER GmbH & Co. KG, D-42855 Remscheid (DE)
(72) Erfinder: Ball, Wilfried, W-8312 Dingolfing (DE); Mischke, Werner, Dr., W-8066 Günding (DE); Stahmer, Michael, W-8000 München 60 (DE); Greiner, Friedrich, W-8501 Obermichelbach b Nbg. (DE)
(74) Vertreter: Dexheimer, Rolf

(56) Entgegenhaltungen:
- EP-A- 0 085 006
- Gnauck, G.; Fründt, P.: "Leichtverständliche Einführung in die Kunststoffchemie", Karl-Hanser-Verlag, München, Wien, zweite Auflage 1997, Seite 143

## Beschreibung

Die Erfindung bezieht sich auf die Verwendung einer im wesentlichen aus Polyurethan bestehenden flexiblen Sichtscheibe für faltbare Verdecke von Cabriolets.

Derartige Sichtscheiben werden in der Regel aus einer 0,8 bis 1,5 mm dicken PVC-Folie gefertigt. Sie können den Faltvorgang des Verdecks mitmachen, ohne dabei zu knicken. Nachteilig ist insbesondere die noch nicht befriedigende Kratzfestigkeit.

Um dies zu verbessern, ist es bereits bekannt (EP-A-0 085 006), eine Kernfolie, die beispielsweise aus Polyurethan-Polyharnstoff bestehen kann, beiderseits mit einer dünneren Deckschicht aus einem hochelastischen Polyurethan mit Selbstheileigenschaften zu versehen. Auf diese Weise läßt sich zwar die Kratz- und Scheuerfestigkeit deutlich verbessern, doch sind derartige Mehrschichtfolien verhältnismäßig teuer und neigen gelegentlich noch zum Ablösen der PUR-Deckschichten von der Kernschicht.

In dem Fachbuch von G. Gnauck und P. Fründt "Leichtverständliche Einführung in die Kunststoffchemie", 2. Auflage, Karl Hanser Verlag, München Wien 1979, Seite 143 wird auf generelle Eigenschaften thermoplastisch verarbeitbarer Polyurethane, wie gummielastisches Verhalten bei höheren Festigkeiten als Weich-PVC, Schlagzähigkeit, Abriebfestigkeit und Weiterreißfestigkeit, gutes Dämpfungsvermögen und einen Einsatzbereich zwischen - 40 °C bis + 80 °C Dauertemperatur des vielseitigen Werkstoffs hingewiesen, ebenso auf die Verfügbarkeit glasklarer Folien des ansonsten durchscheinenden bis undurchsichtigen Kunststoffs, nicht jedoch auf die spezielle Eignung solcher Folien für flexible Sichtscheiben.

Der Erfindung liegt die Aufgabe zugrunde, für glasklare Polyurethan-Folien ein neues Anwendungsgebiet aufzuzeigen, bei dem es unter anderem auch auf eine hohe Knickbeständigkeit und eine geringe Kratzempfindlichkeit ankommt.

Diese Aufgabe wird erfindungsgemäß durch die Merkmale des Patentanspruchs gelöst. Bei einer solchen Fertigung und Verwendung einer Polyurethan-Folie verbindet sich hohe Knickbeständigkeit wie bei bisher überwiegend verwendeten PVC-Sichtscheiben mit der Kratzunempfindlichkeit des bisher als Deckschicht verwendeten Polyurethans, ohne allerdings die Nachteile, die ein zusätzlicher Auftrag einer Beschichtung im Herstellungsprozeß mit sich bringt, hinnehmen zu müssen.

Mit der neuen Sichtscheibe ergeben sich niedrige Herstellkosten.

## Patentansprüche

1. Verwendung einer im wesentlichen aus Polyurethan bestehenden flexiblen Sichtscheibe für faltbare Verdecke von Cabriolets, die ohne einen zusätzlichen Auftrag einer Beschichtung im Herstellungsprozeß gefertigt ist.

## Claims

1. The use of a flexible window pane comprising essentially polyurethane for folding tops for cabriolets, which is manufactured without the additional application of a lamination in the production process.

## Revendications

1. Application d'une vitre souple essentiellement en polyuréthane pour des capotes pliantes de cabriolets, fabriquée sans application complémentaire d'un revêtement au cours du procédé de fabrication.
